# EUROPÄISCHE PATENTSCHRIFT

(11) **EP 2 263 775 B1**
(45) Veröffentlichungstag und Bekanntmachung des Hinweises auf die Patenterteilung: **26.09.2012**
(21) Anmeldenummer: 10164010.0
(22) Anmeldetag: 27.05.2010
(51) Int. Cl.: B01D 46/02, B01D 46/00

(54) **Schlauchfiltervorrichtung**
Hose filter device
Dispositif de filtre de flexible

(30) Priorität: 15.06.2009 CH 9342009
(43) Veröffentlichungstag der Anmeldung: 22.12.2010
(73) Patentinhaber: Eisenegger, Edwin, 9246 Niederbüren (CH)
(72) Erfinder: Eisenegger, Edwin, 9246 Niederbüren (CH)
(74) Vertreter: Révy von Belvárd, Peter

(56) Entgegenhaltungen:
- EP-A2- 0 091 673
- DE-A1- 19 641 257
- US-A- 4 264 345

## Beschreibung

Die vorliegende Erfindung bezieht sich auf eine Schlauchfiltervorrichtung nach dem Oberbegriff des Anspruches 1.

Sieht man sich etwa die DE-37 43 789 an, in welcher eine Schlauchfiltervorrichtung mit einer Tragplatte und eine Vielzahl von einzeln daran zu befestigenden Schlauchfiltern gezeigt ist, so versteht man, dass eine notwendig werdende Auswechselung dieser Schlauchfilter eine mehrstündige Arbeit erfordert, während welcher Zeit die Filtervorrichtung nicht genutzt werden kann und die überdies auch noch kostenintensiv ist.

Nun hat es in der Vergangenheit auch nicht an einigen Vorschlägen gefehlt, wie das Auswechseln rationeller, vor allem mit geringerer Stillstandszeit, durchgeführt werden kann. Ein Beispiel, von dem die vorliegende Erfindung ausgeht, ist die DE-28 27 926. Dabei wird ein sehr grosses Filtergehäuse verwendet, welches mehrere Kammern umschliesst. Ein Rahmen, der praktisch hauptsächlich aus der oben genannten Tragplatte besteht, kann mittels eines Krans aus seiner Filtrierstellung, in welcher die Staubluft gereinigt wird, hochgehoben und so aus der Filterkammer in eine im gleichen Gehäuse untergebrachte Austauschkammer gebracht wird, während anschliessend eine neue Tragplatte mit frischen, an ihr bereits befestigten Filterschläuchen in die Filterkammer eingesetzt wird.

Gerade wie die schon genannte, spätere DE-37 43 789 zeigt, hat sich das System nach der DE-28 27 926 in der Praxis nicht durchgesetzt. Dafür gibt es mehrere Gründe:
- Zum einen ist die ganze Konstruktion ziemlich platzaufwendig, denn sie muss nach oben hin so hoch sein, dass der Kran und die Höhe eines ganzen Filterschlauchmoduls samt Tragplatte untergebracht werden kann; ausserdem aber muss sie auch noch die Austauschkammer aufnehmen.
- Das Herausheben des Filtersatzes, mit dem ja an der Oberseite die Saugleitung verbunden ist, bedingt, dass die Saugleitung abgekuppelt werden muss, was einerseits zusätzliche Arbeit in nicht angenehmer Atmosphäre bedeutet, anderseits im Betrieb Abdichtungsprobleme schafft.
- Die Tatsache, dass die Austauschkammer innerhalb desselben Gehäuses wie die Filterkammer untergebracht ist, bewirkt eine Belastung des Personals, das in diesem Bereich arbeiten muss.

Weiterhin sind die Schriften EP1428565A1, EP0091673A2, DE202008008464U U1 und US3788046 A bekannt, die allerdings das Problem der Dichtung nicht lösen und daher auch in der Praxis keinerlei Anwendung finden.

Das Dokument DE 196 41 257, welches die Merkmale des Oberbegriffes des Anspruches 1 offenbart, zeigt zwar eine Schiebeführung für mehrer Filter, doch ist die Abdichtung etwas problematisch, weil beim Schieben der Tragplatte für die Filterschläuche über Dichtflächen diese einer starken Abnützung unterworfen sind. Dies gilt im Prinzip auch für die Konstruktion nach EP 0 091 673.

Der Erfindung liegt daher die Aufgabe zugrunde, bei verringerten Stillstandszeiten beim Auswechseln von Filterschläuchen und allenfalls auch für das Personal weniger belastend zu gestalten und dabei dennoch eine gute Abdichtung über längere Zeit zu sichern. Erfindungsgemäss wird diese Aufgabe durch die kennzeichnenden Merkmale des Anspruches 1 gelöst

Die Halteflächen können im einfachsten Fall so gestaltet sein, dass sie den Eingriff der Gabel eines Gabelstaplers erlauben, also etwa als oberhalb der Tragplatte angeschweisste Bügel, in welche die Gabelzinken des Gabelstaplers eingreifen können. Es braucht also nur die Saugleitung für relativ kurze Zeit abgestellt und die Türe des Gehäuses geöffnet werden, worauf die Tragplatte samt den darauf befindlichen bzw. von ihr herabhängenden Filterschläuchen horizontal heraus- und eine andere Tragplatte in das Gehäuse hineinbewegt werden. Damit wird das Gehäuse gegenüber dem genannten Stand der Technik sowohl in der Höhe als auch in Horizontalrichtung kleiner. Das Auswechseln der Filterschläuche an der herausgenommenen Tragplatte kann in aller Ruhe und in die Atmung nicht beeinträchtigender Umgebung durchgeführt werden, weil ja keine Austauschkammer innerhalb des, Gehäuses mehr erforderlich ist.

Erfindungsgemäss ist - ähnlich einer Schubladenführung - eine im wesentlichen horizontal verlaufende Schiebeführung für zwei einander gegenüberliegende Ränder der Tragplatte derart vorgesehen ist, dass die Tragplatte samt den an ihr festgelegten Schlauchfiltern aus einer Filtrierstellung im Inneren des, vorzugsweise bauchigen, Gehäuses schubladenartig durch eine Türe des Gehäuses hindurch herausschiebbar ist. Dabei kann die Schiebeführung in den verschiedensten Ausführungsformen gestaltet sein, beispielsweise nach Art eines Rollenförderers, bei dem die Tragplatte von Rollen unterstützt und auf diesen abrollend heraus bewegbar ist.

Zwar kann die Dichtheit zwischen der Reingaskammer und der Staubkammer durch eine labyrinthartige Ausgestaltung von Schiebeführung und Tragplattenrand erreicht werden, doch ist es bevorzugt, wenn für mindestens einen Rand der Tragplatte eine Dichtungseinrichtung vorgesehen ist, an welcher der Rand der Tragplatte in der Filtrierstellung anliegt und so gegen die an die Saugleitung angeschlossene Oberseite des Gehäuses abdichtet.

Für diesen Fall ist die Abhebeeinrichtung vorgesehen, durch die die Tragplatte während des Schiebens entlang der Schiebeführung von der Dichtungseinrichtung abhebbar ist. Denn obwohl es an sich denkbar wäre, eine nach unten von der Tragplatte abhebbare und somit bewegliche Dichtung, z.B. in Form eines Dichtungsbalges, zu machen, ist die für eine gute Dichtung zweckmässige Anpressung an die Randfläche der Tragplatte im allgemeinen durch das Gewicht der Tragplatte samt den an ihr hängenden Filterschläuchen von selbst gegeben, d.h. der Vorteil liegt in der sicher gestellten guten Abdichtung. Denn beim Stand der Technik war vorgesehen, die Tragplatte beim Herausnehmen über die Dichtung schleifen zu lassen, wobei sich die Lebensdauer der Dichtungseinrichtung verringert.

Beim Einsatz von Rollen für die Schiebeführung ist es konstruktiv einfach, dass die jeweils eine Rolle am Rande mit einer Verstelleinrichtung verbunden ist, durch welche sie aus einer Dichtstellung, in welcher sie die Tragplatte gegen die Dichtung drückt, in eine Führungsstellung verstellbar ist, in welcher die Rolle den Druck gegen die Tragplatte und die Dichtungseinrichtung aufhebt und die Rolle nach Art eines Rollenförderers für die Verschiebung der Tragplatte wirkt und so einen Teil der Schiebeführung bildet. Auf diese Weise übernimmt nämlich die jeweilige Rolle einmal die Aufgabe einer Andruckeinrichtung für eine sichere Abdichtung zwischen Reingaskammer und Staubkammer während des Filtervorganges, und einer Schiebeführung während des Herausziehens und Auswechselns des Filtermoduls (Tragplatte + Filterschläuche), und sie kann auch die Funktion der Abhebeinrichtung übernehmen, wie sich aus der späteren Beschreibung eines Ausführungsbeispieles ergibt.

Die Schiebeführung kann mindestens eine gegen die Tragplattenmitte hin offene, den Rand der Tragplatte haltende U-Schiene mit zwei zueinander parallelen Schenkeln und einem Mittelabschnitt aufweisen, die zum Gleiten der Tragplatte dient. Vorzugsweise ist diese U-Schiene am Rande der Tragplatte fixiert, insbesondere mit ihr einstückig, nach oben ragend vorgesehen.

Wenn nun die Schiebeführung und/oder die Tragplatte über die Länge der Platte insgesamt mindestens zwei Rollen an jedem Rand aufweist, so dass das Herausziehen müheloser vor sich geht, dann kann eine Verstelleinrichtung für die jeweilige Rolle einen Hebel aufweisen, an dessen einem Ende die Rolle gelagert ist, und mit einer Betätigungseinrichtung verbunden sein, um die oben besprochenen alternativen Funktionen wechselweise durchführen zu können.

Beim Herausziehen der Tragplatte samt den Filterschläuchen kann, wie schon erwähnt, ein Gabelstapler oder eine andere Hebeeinrichtung (Kran od.dgl.) Anwendung finden, der die, beispielsweise schubladenartig geführte Tragplatte von aussen übernehmen kann. Eine Erleichterung ergibt sich aber, wenn eine Halteeinrichtung für das beim Herausschieben der Tragplatte von der Führungseinrichtung ununterstützte Ende der Tragplatte vorgesehen ist, wobei vorzugsweise diese nach Art eines Hebezeuges ausgebildet ist, und wobei insbesondere das Hebezeug an der Oberseite des Gehäuses in dessen Inneren montiert ist, in welch letzterem Falle auch der Platzbedarf für das nun im Gehäuse, nämlich in der Reingaskammer, untergebrachte Hebezeug geringer ist, als müsste es von aussen her hinzugestellt werden.

Da erfindungsgemäss das den Filtermodul aufnehmende Gehäuse praktisch nur die Filterkammer beherbergt, lässt sich die Entstaubungswirkung weiter verbessern, indem am, vorzugsweise bauchigen, Gehäuse mindestens ein seitlich, vorzugsweise wenigstens annähernd tangential, einmündender Staubgaseinlass vorgesehen ist. Der Eintritt der Staubgasleitung in die Staubkammer, welche natürlich einen grösseren Querschnitt besitzt als die Staubgasleitung, ergibt einen Staubabscheideeffekt, was die Beladung der Filterschläuche mit Staub über die Zeit verringert, d.h. sie können in grösseren Intervallen als bisher durch Rütteln oder Abblasen entstaubt werden. Das trägt einerseits zu einer längeren Lebensdauer der Filterschläuche, anderseits zu einer besseren Effizienz der erfindungsgemässen Schlauchfiltervorrichtung bei. Bei etwa tangentialem Einmünden der Staubgasleitung ergibt sich eine Art Zykloneffekt, besonders, wenn das Gehäuse bauchig, z.B. im Querschnitt wenigstens annähernd kreisrund, gegebenenfalls aber auch oval oder ein abgerundetes Viereck bzw. ein Viereck mit Zylinderflächen ist. Eine solche Bauchigkeit hat auch einen anderen Vorteil, nämlich den einer Verstärkung des Gehäuses gegenüber dem in seinem Inneren herrschenden Unterdruck. Allerdings ist die Erfindung nicht auf diese Form beschränkt, weil es ja auch möglich wäre, gerade Wände in entsprechender Stärke bzw. mit Verstärkungsrippen vorzusehen.

Weitere Einzelheiten der Erfindung ergeben sich an Hand der nachfolgenden Beschreibung von in der Zeichnung schematisch veranschaulichten Ausführungsbeispielen. Es zeigen:
- Fig.: 1 eine erfindungsgemässe Schlauchfiltervorrichtung in Perspektivansicht;
- Fig. 2: eine erste Ausführung einer Schiebeführung für eine erfindungsgemäss ausgebil- dete Tragplatte;
- Fig. 3: eine bevorzugte Ausführungsform im Axialschnitt durch das Gehäuse entlang etwa einer Linie III der Fig. 1, wovon
- Fig. 4: ein Detail in grösserem Massstab veranschaulicht;
- Fig. 5: einen Querschnitt durch das Gehäuse entlang einer in Fig. 1 mit V angedeuteten Ebene;
- Fig. 6: einen Schnitt durch den mit Halteflächen versehenen Rand der Tragplatte bzw. der Schiebeführung;
- Fig. 7: eine schematische Vorderansicht eines gegenüber der Ausführung nach Fig. 1 ab- gewandelten Ausführungsform mit einer am Gehäuse vorgesehenen Ab- stützeinrichtung in einem Schnitt in der Ebene VII der Fig. 1, wobei die
- Fig. 8: eine der Fig. 5 ähnliche Darstellung zur Veranschaulichung der Arbeitsweise einer mit einer Halteeinrichtung zusammenwirkenden Abstützeinrichtung.

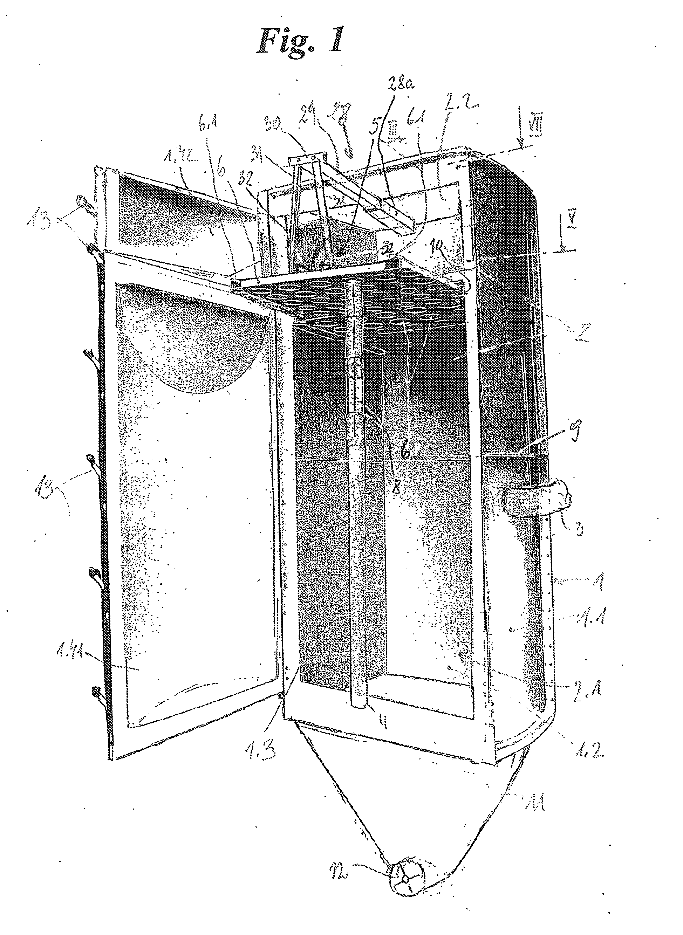

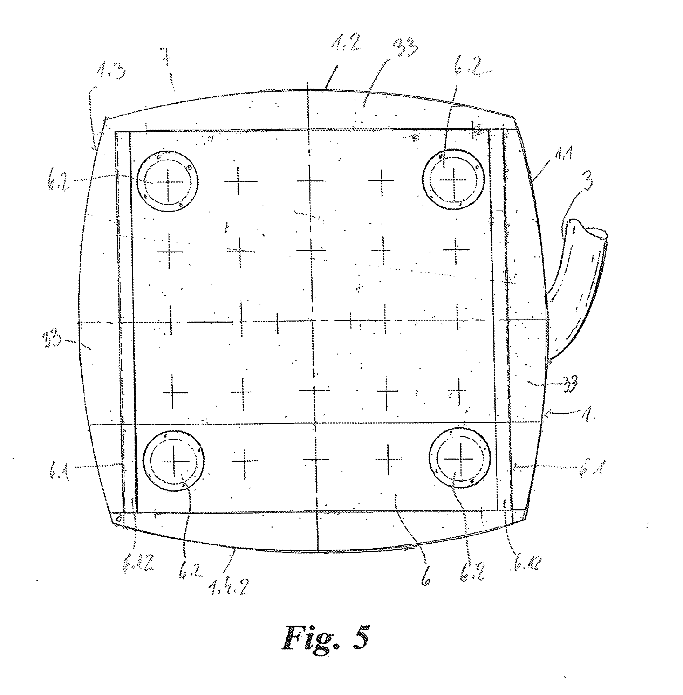

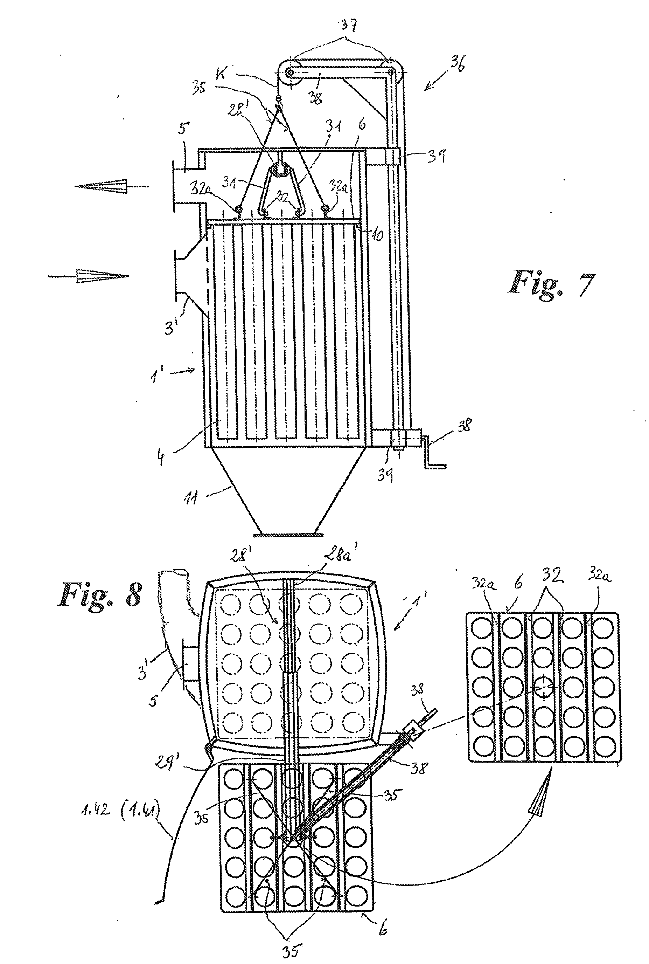

Gemäss Fig. 1 umschliesst ein Gehäuse 1 eine als Ganzes mit 2 bezeichnete Filterkammer, die in eine untere Staubkammer 2.1 und eine obere Reingaskammer 2.2 unterteilt ist. Dementsprechend ist das Gehäuse 1 an eine in den Fig. 1 und 5 nur angedeutete, in Fig. 8 hinsichtlich ihrer Form besser ersichtliche Staubgaseinlassleitung 3 angeschlossen, welche zu reinigendes Gas, im allgemeinen Luft, in die Staubkammer 2.1 bringt, wo es bzw. sie durch Schlauchfilter 4 (nur einer ist gezeigt) in bekannter Weise gereinigt wird, während das Innere der Schlauchfilter 4 unter dem Unterdruck einer Saufleitung 5 steht, die von der Reingaskammer 2.2 ihren Ausgang nimmt. Das Gehäuse 1 besteht vorzugsweise aus einzelnen bauchig, z.B. kreisförmig oder oval, gekrümmten Wandabschnitten 1.1, 1.2, 1.3, 1.41 und 1.42, wie besonders aus Fig. 5 zu sehen ist, wo die Gehäusewände bloss als einfache Striche unter Vernachlässigung der Blechstärke dargestellt sind. Dabei kann - wegen des über die Saugleitung 5 vermittelten Unterdruckes auch da oder dort eine Verstärkungsrippe 9 vorgesehen sein. Die bauchige Form (hier in Form eines Vierecks mit nach aussen gebauchten Zylinderwänden im weitesten Sinn, d.h. es muss kein Kreiszylinder sein) ist auch aus anderen Gründen bevorzugt, wie später an Hand der Fig. 5 noch erläutert wird. Es wäre aber ebenso möglich, das Gehäuse mit einem Quadrat- oder Rechteckgrundriss zu versehen, in welchem Falle es dann entsprechend zu verstärken wäre (vgl. die Rippe 9).

Die Schlauchfilter 4 sind an einer Tragplatte 6 in an sich bekannter Weise befestigt, beispielsweise angeschraubt, wie dies in Fig. 5 durch Schraubbolzen 7 angedeutet ist, oder in jeder beliebigen, an sich bekannten Weise, wie etwa auch gemäss der US-A-3,279,608. Wie etwa die schon genannte DE--37 43 789 deutlich zeigt, muss die Tragplatte 6 nach dem Stande der Technik begehbar sein, um die Schlauchfilter 4 nach oben hin aus Löchern 6.2 der Tragplatte 6 herausziehen zu können. Wie auch die genannte DE-28 27 926 zeigt, verläuft dieser Vorgang herkömmlicher Weise in mehreren Schritten, wobei zuerst der den Filterschlauch abstützende Korb 8 herausgezogen werden muss, bevor dann erst der Fifterschlauch selbst herausgezogen werden kann. Da Filterschläuche normgemäss eine in Abstufungen von 60 cm von 1,2 m bis 3 m grosse Länge besitzen, die in die Reingaskammer 2,2 gezogen werden muss, hat die Reingaskammer 2.2 herkömmlicher Weise eine beträchtliche Höhe, die für den normalen Betriebszustand der Schlauchfiltervorrichtung gar nicht nötig wäre, sondern nur für die Wartung. Vergleicht man dagegen die Kammern 2.1 und 2.2 der Fig. 1, so ist ersichtlich, dass bei erfindunggemässer Ausbildung die Reingaskammer 2.2 relativ niedrig gehalten werden kann, was eine Platz- und Kosteneinsparung mit sich bringt.

An der Unterseite des Gehäuses 1 wird eine an sich bekannte und übliche Austragsvorrichtung angeschlossen sein, also beispielsweise ein Austragstrichter 11 mit einer Flügelradschleuse 12 oder einer beliebigen anderen Vorrichtung für diesen Zweck.

Es wurde schon gesagt, dass die Arbeit des Herausziehens der Filterkerzen 4, 8 beim Stand der Technik viele Arbeitsstunden erfordert, weil ja jeder einzelne Schlauch (und wie Fig. 1 zeigt, sind es ja sehr viele) erst aus seiner Befestigung gelöst, dann der Korb 8 herausgezogen und erst am Ende der Filterschlauch selbst. Diese Arbeit geht in der Reingaskammer 2.2 vor sich, was angesichts möglicher Geruchsbelastungen etc. gesundheitlich bedenklich ist. Zudem ergibt sich dadurch eine beträchtliche Stillstandszeit, was die Betriebskosten weiterhin belastet. Dabei muss man sich vor Augen halten, dass ein Filterwechsel in der Getreidemüllerei zwar in Zeiträumen von wenigen Monaten bis eineinhalb Jahren zu erfolgen braucht, dass aber etwa beim Filtern von Farbpigmenten die Filter stets beim Wechsel von einer Farbe zur anderen ausgewechselt werden müssen, und das kann sehr häufig sein.

Um hier Abhilfe zu schaffen und eine Schlauchfiltervorrichtung wirtschaftlicher betreiben zu können, zeigt Fig. 1, dass zunächst einmal von den vier Wänden des Gehäuses eine Vorderwand von Türen 1.41, 1.42 gebildet ist, durch sich ein erleichterter Zugang zu den Kammern 2.1, 2.2. und vor allem auch zur Tragplatte 6 ergibt. Während des Filterns können die Türen 1.41, 1.42 mittels Riegeln 13 dicht am Gehäuse 1 verriegelt werden. Die Tragplatte 6 weist an ihrer Oberseite Halteflächen 6.1 auf, an welchen sie samt den an ihr festgelegten Schlauchfiltern 4 aus einer Filtrierstellung im Inneren des Gehäuses 1 schubladenartig durch die Türe 1.41 des Gehäuses 1 hindurch bewegbar ist. In Fig. 1 ist die Tragplatte 6 in halb herausgezogenem Zustand gezeigt.

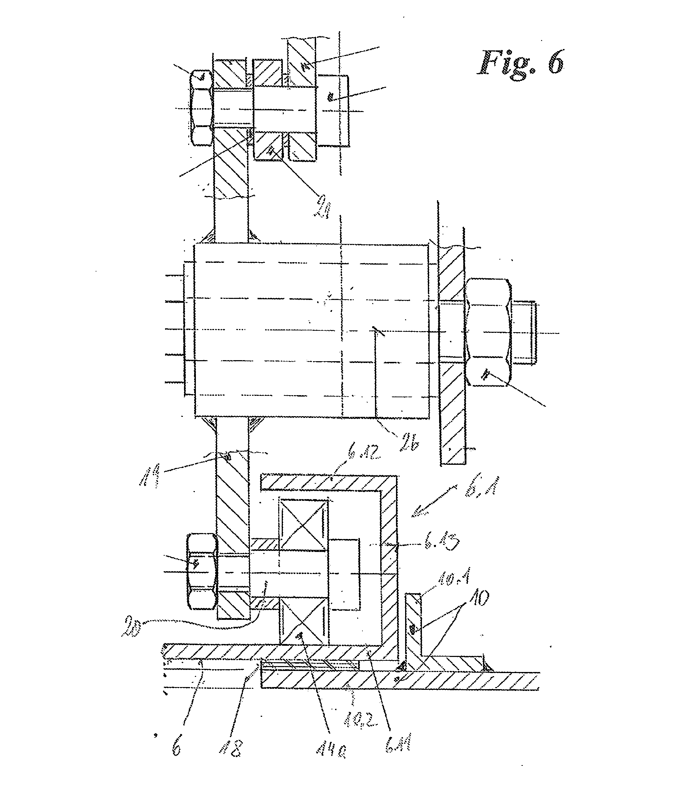

Die Halteflächen 6.1 sind als gegen die Mitte der Tragplatte 6 hin offene, den Rand der Tragplatte 6 haltende U-Schienen mit - wie besonders Fig. 6 zeigt - zwei zueinander parallelen Schenkeln 6.11, 6.12 und einem Mittelabschnitt 6.13. Wie es einer bevorzugten Ausführungsform entspricht, ist die U-Schiene 6.1 am Rande der Tragplatte 6 fixiert und zwar hier, indem sie mit ihr einstückig, nach oben ragend ausgebildet ist. Eine vereinfachte Ausführung könnte aber darin bestehen, dass an der Oberseite der Tragplatte, beispielsweise mehr gegen die Mitte hin, mindestens ein, vorzugsweise zwei Bügel in einem derartigen Abstand voneinander befestigt sind, dass die Gabeln eines Gabelstaplers in sie eindringen können, um die Tragplatte 6 aus einer Schiebeführung 10 (vgl. Fig. 6) am Gehäuse 1 herausgezogen werden kann.

Damit ist es möglich, beim Filterwechsel bzw. zur Wartung die gesamte Einheit von Tragplatte 6 samt Filterschläuchen 4 und Körben 8 zunächst ohne Lösen der Befestigung (vgl. die Schrauben 7 in Fig. 5) herauszuziehen und durch eine neue, schon fertig mit Filterschläuchen 4 bestückte Tragplatte zu ersetzen, ein Wechsel, der statt der bisher benötigten mehreren Stunden in 10 Minuten vor sich gehen kann, d.h. die Stillstandszeiten für eine solche Schlauchfiltervorrichtung werden auf einem um Grössenordnungen geringeren Minimum gehalten. Dabei müssen dann an der eben herausgezogenen Tragplatte 6 die Filterschläuche nicht in einer gesundheitsbelastenden Umgebung entfernt werden, sondern können in aller Ruhe , etwa an einem Gestell hängend, aus der Tragplatte 6 herausgezogen werden. Beim Transport der Tragplatte 6 samt Filterschläuchen 4 ergeben die Körbe 8 auch noch eine stabilisierende Wirkung, d.h. im Gegensatz zu Stand der Technik (vgl. DE-28 27 926), nach dem man noch einen Rahmen für die Tragplatten/ Filter-Einheit für erforderlich gehalten hat, kann ein solcher, die Filter umspannender Rahmen entfallen.

Wenn die Tragplatte 6 aus dem Gehäuse 1 herausgezogen wird, dann kommt ein Punkt, an dem das Gewicht der von der Schiebeführung 10 gehaltenen Teiles gleich gross wie der des schon herausgezogenen Teiles ist. Spätestens an diesem Punkt wird es also zweckmässig sein, den herausgezogenen Teil mittels einer Halteeinrichtung zu halten. Dies kann ein von aussen herangeführtes Hebezeug (im weitesten Sinne, also auch ein Gabelstapler) sein, z.B. ein Kran, doch zeigt Fig. 1 eine kompaktere Lösung. Dabei ist ein Teleskoparm 28 an der Decke des Gehäuses 1 befestigt. Sein ausziehbarer Teil 29 trägt an seinem Ende eine Lagerplatte 30, an der zwei Hakenhebel 31 gelenkig gelagert sind. Mit den (nicht gezeigten, am unteren Ende der Hebel 31 befindlichen) Haken dieser Hebel 31, kann der jeweilige Hebel 31 in entsprechende, nicht dargestellte Öffnungen zweier an der Oberseite der Tragplatte 6 befestigter Schienen 32 eingeklinkt werden, so dass die Tragplatte 6 gemeinsam mit dem Arm 29 aus dem Gehäuse 1 herausgezogen werden kann. Es versteht sich, dass die Halteinrichtung 28 auch nach Art eines an einer Schiene fahrenden Kranes ausgebildet sein könnte.

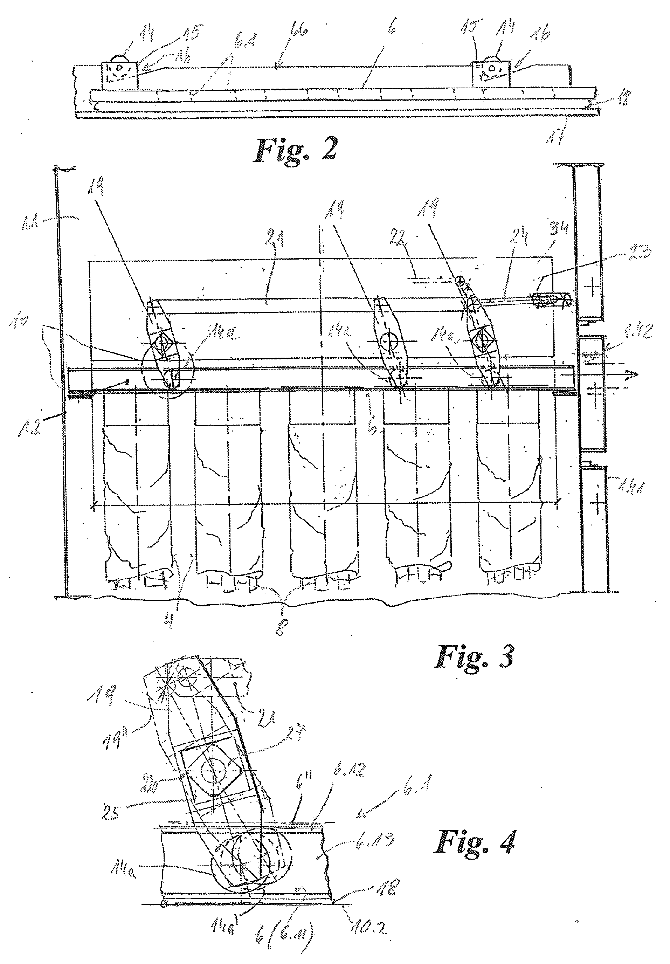

Die schon erwähnte Schiebeführung 6.1 kann in einer ähnlichen Ausführung vorgesehen werden, wie dies für Schubladen im Möbelbau bekannt ist. Dabei kann für den vorliegenden Anwendungszweck eine Ausbildung einer solchen Schiebeführung von Vorteil sein, bei der die Schublade am Ende ihrer Bewegung in das Innere in eine Ausnehmung einfällt. Denn man darf nicht übersehen, dass die Tragplatte 6 zur Vermeidung von Druckverlusten zwischen der Staubkammer 2.1 und der Reingaskammer 2.2. in der Filtrierstellung im Inneren des Gehäuses 1 möglichst abgedichtet sein soll. Nun wäre es an sich denkbar, die Tragplatte 6 eben über diese Dichtung fahren zu lassen, doch wäre das mit einer relativ raschen Reibungsabnützung der Dichtung verbunden. Deshalb ist es vorteilhaft, wenn eine Abhebeeinrichtung vorgesehen ist, durch die die Tragplatte während des Schiebens entlang der Schiebeführung von der Dichtungseinrichtung abhebbar ist. Eine solche Abhebeeinrichtung kann aber in die Schiebeführung integriert sein, wie etwa die Fig. 2 veranschaulicht. Es versteht sich aber, dass die verschiedensten Abhebeeinrichtungen vorgesehen sein können, beispielsweise indem der Schenkel 10.2 der Schiebeführung 10 beweglich und gegen die Unterseite der Tragplatte bewegbar ist. Dabei kann eine solche Bewegung beispielsweise über einen Winkelhebel erfolgen, von dem ein oberer Arm beim Erreichen der Filtrierstellung durch die Tragplatte 6 angestossen und verschwenkt wird, wobei der untere, abgewinkelte Arm den Schenkel 10.2 mit der Dichtung 18 von unten an die Tragplatte 6 drückt. Mit einem ähnlichen Hebelgetriebe könnte auch die Tragplatte 6 gegenüber der Dichtung 18 angehoben werden. Denn es versteht sich, dass unter Anhebeeinrichtung eine Einrichtung zu verstehen ist, die eine Relativbewegung zwischen Dichtung und Tragplatte 6 erzeugt, wobei es im allgemeinen die Tragplatte 6 sein wird, die bewegt wird.

Fig. 2 veranschaulicht eine bei Schubladen übliche Schiebeführung in Form einer Schiene 66. Die Tragplatte 6 kann entlang der Oberseite dieser Schiene 66 laufen und weist zu diesem Zwecke zwei Tragrollen 14 auf, die an aus der Ebene der Tragplatte 6 gebogenen oder an ihre befestigten Lappen 15 gelagert sind. Die Schiene 66 hat zwei, z.B. etwa sägezahnförmige, Ausnehmungen, in welche die Rollen 14 dann eingreifen, wenn die Tragplatte 6 die während des Filtrierens erforderliche Filtrierstellung, also ganz im Gehäuse 1 (vgl. Fig. 1) eingenommen hat. Dadurch wird die Tragplatte 6 etwas abgesenkt und drückt daher mit ihrem Gewicht auf eine darunter befindliche, von einer Schiene 17 abgestützte Dichtung 18, die sie zusammendrückt, wogegen die Tragplatte 6 beim Herausziehen (nach rechts in Fig. 2) entlang der Schrägflächen der Ausnehmungen 16 aufwärts rollt und damit von der Dichtung 18 abhebt. Bei dieser Ausführung schleift also die Tragplatte 6 nur in geringem Masse während des Anhebens über die Schrägflächen der Ausnehmungen 16 an der Dichtung.

Immerhin lässt sich diese geringe Abnützung ebenfalls vermeiden, wenn eine Ausführung gewählt wird, wie sie nun an Hand der Fig. 3, 4 und 6 beschrieben wird. Dabei haben Teile gleicher Funktion dieselben Bezugszeichen, wie schon bisher verwendet wurden, Teile nur ähnlicher Funktion dieselben Bezugszeichen, jedoch mit einem Zusatz.

Wir Fig. 6 zeigt, wird hier die schon oben erwähnte Ausbildung eines U-Profils 6.11 bis 6.13 am jeweiligen Rand der Tragplatte 6 verwendet, welches Profil in der ortsfesten Schiebeführung 10 läuft. Hier allerdings wirken mehrere Teile zur Führung der Tragplatte 6 beim Herausziehen (vgl. Fig. 1) zusammen. Zunächst ist ersichtlich, dass die Schiebeführung 10 mit ihrem vertikalen Lappen 10.1 nur als seitliche Begrenzung für den Mittelteil 6.13 des U-Profiles 6.1 dient, wogegen der horizontale Lappen 10.2 hauptsächlich als Träger der Dichtung 18 und als Gegenhalter gegen den über die Tragplatte 6 ausgeübten Druck dient.

Im Inneren des U-Profiles sind - wie vor allem auch Fig. 3 zeigt - mehrere Rollen 14a vorgesehen, die eine mehrfache Funktion ausüben. Dazu sind die Rollen 14a verstellbar gelagert, um jeweils eine dieser Funktionen ausüben zu können. Die Art der Verstelleinrichtung kann an sich beliebig sein, doch ist die Lagerung an einer an einem Hebel 19 befestigten Achse 20 das Einfachste. Wie Fig. 2 zeigt, sind alle Hebel 19 mit einer gemeinsamen Betätigungsstange 21 verbunden. Die Betätigung dieser Stange 21 kann an sich beliebig erfolgen, beispielsweise, indem man an einem Hebel 19 (rechts in Fig. 2) das Ende einer strich-punktiert angedeuteten Kolbenstange 22 eines Pneumatikzylinders anschliesst (an sich könnte es auch ein Hydraulikzylinder sein, doch ist ein Pneumatikzylinder wegen einer allfälligen Verschmutzungsgefahr durch Hydrauliköl bevorzugt). Es kann aber auch eine Schraubhülse 23 vorgesehen werden, in die ein die Betätigungsstange 21 verschiebender Schraubbolzen 24, z.B. mittels eines Schraubschlüssels, ein- oder ausschraubbar ist.

In Fig. 4 sind die möglichen Stellungen und Funktionen des Hebels 19 auf Grund der Betätigung durch die Betätigungsstange 21 veranschaulicht. In der mit vollen Linien dargestellten Lage der Rolle 14a, liegt diese nicht nur an dem eine Verlängerung der Tragplatte 6 bildenden Schenkel 6.11 des U-Profiles 6.1 an, sondern er drückt auch die Tragplatte 6 (zusätzlich zu ihrem Gewicht) gegen die Dichtung 18. Damit ist die Tragplatte auch gewissermassen "verriegelt". Damit der ausgeübte Druck möglichst gleichmässig ist, sind vorzugsweise auch mehr als nur zwei Rollen (vgl. die Ausführung nach Fig. 2) vorgesehen, doch soll natürlich auch der konstruktive Aufwand klein gehalten werden, weshalb eine Anzahl von 3 bis 5 Rollen 14a (siehe die drei Rollen in Fig. 2) bevorzugt ist.

Wird der Hebel 19 etwas im Uhrzeigergegensinne verschwenkt, gelangt die Rolle 14a in die in Fig. 3 strichliert gezeigte Stellung 14a', in der sie an der Unterseite des Schenkels 6.12 des U-Profiles 6.1 anliegt (Dichtstellung). In dieser Stellung könnte die Tragplatte 6 an sich auf den Rollen 14a (bezogen auf Fig. 2) nach rechts abrollen, um aus dem Gehäuse 1 herausgezogen zu werden. Um aber zu sichern, dass die Tragplatte gewiss nicht auf der - im allgemeinen elastischen - Dichtung 18 schleift und diese ungebührlich beansprucht, wird der Hebel 19 noch um ein kleines Stück weiter in die Stellung 19" verschwenkt, wie strich-punktiert angedeutet ist. In dieser Stellung liegt die Rolle 14a nicht nur am der Unterfläche des oberen Schenkels 6.12 an, sondern sie hebt diesen - und damit die ganze Tragplatte 6 - in die strich-punktierte Stellung 6", d.h. die Rolle 14a wirkt in der einen Stellung (volle Linien) als Andruckeinrichtung, in der strichlierten Stellung als Abrolleinrichtung als Teil der Schiebeführung und in der dritten, strich-punktierten Stellung (Führungsstellung) als Anhebeeinrichtung, wodurch alle drei Funktionen von einer einzigen Konstruktion erfüllt werden.

Der Hebel 19 kann als zweiarmiger Hebel etwa mittig an einem normalen Lagerzapfen gelagert werden, doch ist im vorliegenden Ausführungsbeispiel ein Teil 26 mit einer viereckigen Öffnung 25 vorgesehen, in die ein gummielastischer Lagerdorn 27 eingreift, um so eine gewisse Elastizität bei der Bewegung der Rolle 14a zu sichern. Ausserdem wird bei Vergleich der Lösungen nach den Fig. 2 und 3 klar, dass an Stelle der Schiene 66 als Schiebeführung auch eine Reihe von Rollen nach Art eines Rollenförderers vorgesehen sein kann, wobei an der Stelle der Ausnehmungen 16 zwei Rollen einen grösseren Abstand als die anderen Rollen voneinander besitzen.

Wie schon erwähnt, ist in Fig. 5 ein Schnitt in der Ebene V der Fig. 1 gezeigt, wobei die Betätigungseinrichtung für die Rollen 14a) der Übersichtlichkeit halber ebenso weggelassen ist, wie die aus Fig. 2 ersichtliche und in Fig. 5 etwa parallel zu den Schenkeln 6.12 verlaufende jeweilige Trägerplatte 34 für die Betätigungseinrichtung.

In dieser Ebene V ist die Oberseite des oberen Schenkels 6.12 des U-Profiles 6.1 an der Tragplatte 6 zu sehen, an der nur vier Löcher 6.2. für die Aufnahme von Filterkerzen 4, 8 gezeigt und die übrigen durch Markierung ihrer Mittelachsen angedeutet sind. Dabei ist ersichtlich, dass das Gehäuse 1 als Viereck mit nur leicht nach aussen gebauchten Zylinderwänden ausgebildet ist. Falls, was natürlich ebenso möglich ist, das Gehäuse kreisrund oder oval od.dgl. ausgebildet wird, dann können sich grössere Zwickel 33 ergeben, in denen noch Löcher entsprechend den Löchern 6.2, aber ortsfest, angebracht werden könnten. Zwar werden damit nicht alle Vorteile der vorliegenden Erfindung erreicht, doch sind diese wenigen Filterkerzen nach dem Herausziehen der Tragplatte 6 leichter zugänglich als nach dem Stande der Technik, werden auch an Zahl nur wenige sein, so dass einerseits bei Filterwechsel nicht zu viel Zeit verloren geht, anderseits der so geschaffene zusätzliche Platz im Gehäuse 1 noch genutzt werden kann.

Allerdings ergibt sich mit der gezeigten Viereckform mit nach aussen gebauchten Zylinderwänden 1.1, 1.2, 1.3 (und der Türwand 1.4.1 nach Fig. 1) ein zusätzlicher Abscheideeffekt. An dem Gehäuse ist nämlich mindestens ein seitlich, vorzugsweise wenigstens annähernd tangential (vgl. auch insbesondere Fig. 8), einmündender Staubgaseinlass 3 vorgesehen, wobei gegebenenfalls n den drei Wänden 1.1, 1.2 und 1.3 solche Staubeinlässe vorgesehen sein könnten. Zum einen ergibt sich so, dass das durch den Einlass 3 einströmende, staubbeladene Gas in einen Gehäuseraum (Staubkammer 2.1, Fig. 1) grösseren Volumens eintritt und dadurch die Strömungsenergie verringert wird. Ein zusätzlicher Effekt kann erreicht werden, wenn - wie in Fig. 5 dargestellt - der Staubeinlass 3 annähernd tangential in die Staubkammer 2.1 (Fig. 1) einmündet. Denn dann strömt das Gas bzw. die Luft annähernd entlang der Einmündungswand 1.1 oder in einem geringen Winkel zu dieser bis die Strömungsenergie durch die Umleitung durch die (vorzugsweise ebenfalls bauchige) Wand der unteren Türe 1.41 (Fig. 1) jäh abgebremst wird, wobei der abzuscheidende Staub bereits zu einem guten Teil in den Abscheidetrichter 11 fällt. Dadurch werden die Filterschläuche 4 an ihrer Aussenseite weniger mit Staub besetzt und brauchen weniger oft entstaubt werden, was entweder durch eine nicht dargestellte, an sich bekannte Rütteleinrichtung, in den meisten Fällen aber durch im Reingasraum untergebrachte Düsen geschieht die jeweils unmittelbar in das Innere der Filterschläuche 4 blasen und so den an der Aussenseite sitzenden Staub ab- und in den Trichter 11 blasen. Dadurch werden aber auch die Filter weniger beansprucht, was die Standzeiten weiter erhöht und die Kosten des Betriebes verringert.

Beim Ausführungsbeispiel nach den Fig. 7 und 8 haben Teile gleicher Funktion wie in den zuvor beschriebenen Ausführung, an Hand welcher der Vorgang beim Herausziehen der Tragplatte 6 aus dem Gehäuse 1 sowohl im Falle der Fig. 1 als auch im Falle der Fig. 7 und 8 beschrieben werden soll.

Die Arbeitsweise und Ausbildung eines Hebezeuges bzw. einer Halteeinrichtung 28 wird im allgemeinen so sein, dass die Klinkenhebeln 31 etwa in der Mitte der Länge der Schienen 32 angreifen, weil ja sonst beim Herausziehen der Teil 29 nicht mehr richtig geführt ist. Anderseits könnte der ausziehbare Teil 29 so lange sein, dass er in der eingezogenen Stellung hinten über die Wand 1.2 nach hinten hinausragt und so in jedem Falle, auch bei Verhakung oder Einklinkung am vorderen Ende der Tragplatte 6 vom ortsfesten Teil 28a des Teleskoparmes 28 gut gehalten ist. Letztlich wäre es ebenso denkbar, dass der ausziehbare Teil 29 über eine relativ kurze Strecke mit der Tragplatte 6 mitfährt, diese dann auf an sich beliebige Weise, vorzugsweise aber auf die aus den Fig. 7 und 8 ersichtliche Art, abgestützt und die Hebel 31 in eine weiter hinten an den Schienen 32 gelegene Öffnung eingehakt werden.

Das Abstützen der Tragplatte 6 kann prinzipiell von unten oder von oben her mit einem Gehänge erfolgen. Letzteres ist, wie dargestellt, bevorzugt. Wenn nämlich die Tragplatte 6 aus der Schiebeführung 10 so weit herausgezogen ist, wie dies in Fig. 1 dargestellt ist, besteht die Gefahr, dass das Gewicht des herausgezogenen Teiles der Tragplatte 6 grösser als das des im Gehäuse 1 verbliebenen Teiles ist und die Tragplatte 6 die Tendenz zum Abkippen hat. Spätestens zu diesem Zeitpunkt wird bei der Ausführung nach den Fig. 7 und 8 ein biegsames Gehänge aus mindestens 2, vorzugsweise vier, Riemen oder Ketten 35. Die Nachgiebigkeit dieses Gehänges 35 besteht darin, dass ein Abstützkran 36 mit Ablaufrollen 37 für ein über eine Kurbel 38, zweckmässig über ein selbsthemmendes Getriebe, z.B. ein Schneckengetriebe, antreibbares Kabel K oder Seil relativ einfach aufgebaut sein kann und das Gehänge 35 die Dimensionsveränderungen, die sich beim Herausziehen der Tragplatte 6 ergeben, ausgleicht. Andernfalls müsste der Kran einen Ausleger 38 haben, der teleskopisch ausfahrbar ist.

Die Halteeinrichtung 28' ist hier insofern gegenüber Fig. 1 verändert, als der ortsfeste, an der Gehäuseoberseite befestigte Teil 28a' aus dem grösser dimensionierten beweglichen Teil 29' herausziehbar ist, d.h. der grössere Teil 29' gleitet am kleiner dimensionierten gehäusefesten Teil 28a'. Aus Fig. 8 ist ersichtlich, dass die Klinkenhebeln 31 etwa in der Mitte der Länge der Schienen 32 angreifen, und Fig. 7 veranschaulicht besser, wie sie in die Schienen 32 eingehängt sind. Nun wird also das Gehänge 35 zweckmässig an weiteren, eher randnahen Schienen 32a eingehängt, und die Klinkenhebel 31 werden entweder noch in weiter hinten befindliche Löcher der Schienen 32 eingehängt, um eine zusätzliche Abstützung zu haben, oder es übernimmt der Abstützkran 36 das Halten der Tragplatte 6, die nun - wie Fig. 8 zeigt - voll herausgezogen wird. Es ist also ersichtlich, dass der Abstützkran 36 Bestandteil der Halteeinrichtung ist 28 ist, oder dass er sie sogar ersetzen kann, wenn zu Anfang des Herausziehens der Tragplatte 6 erst die beiden vorderen Riemen, Kabel, Ketten oder Seile des Gehänges 35 eingehängt werden und erst später die beiden hinteren.

Der Abstützkran 36 ist, wie Fig. 7 zeigt, in einfachen, eine Drehung zulassenden Lagern 39 gelagert, so dass er nun, wenn sich die Tragplatte in der voll herausgezogenen Lage gemäss der unteren Darstellung der Fig. 8 befindet, so geschwenkt werden kann, dass die Tragplatte 6 in die in Fig. 8 rechts gezeigte Lage kommt, wo sie entweder auf einem Traggestell zur Auswechslung der Filterkerzen 4, 8 abgestellt oder mit dem (z. B. fahrbaren) Gestell oder einem Gabelstapler an einen Ort gebracht wird, wo das Auswechseln erfolgt. Praktisch gleichzeitig kann eine an einem anderen Gestell oder Gabelstapler eine neue, frisch bestückte oder die Schläuche für ein anderes Farbpigment beinhaltende Tragplatte herangebracht und in die Schiebeführung 10 bzw. das Gehäuse 1 eingeschoben werden. Damit reduziert sich der Auswechselvorgang auf wenige Minuten, wobei die weggebrachte Tragplatte an einem Ort neu bestückt werden kann, der gesundheitlich unbedenklich ist.

## Patentansprüche

1. Schlauchfiltervorrichtung mit einer Filterkammer (2), in der eine Mehrzahl von in ihrem Inneren einen Stützkorb (8) aufnehmenden Filterschläuchen (4) mit ihrer Oberseite an einer Tragplatte (6) festgelegt und durch Löcher (6.2) derselben hindurchgesteckt sind, wobei die durch die Tragplatte (6) in eine obere Reingaskammer (2.2) und eine untere Staubkammer (2.1) unterteilte Filterkammer (2) in einem mit der Reingaskammer (2.2) an eine Saugleitung (5) angeschlossenen Gehäuse (1) untergebracht ist und die Tragplatte (6) samt den an ihr festgelegten Schlauchfiltern (4) aus der Filterkammer (2) herausnehmbar ist, wobei die Tragplatte (6) an ihrer Oberseite Halteflächen (6.1) aufweist, an welchen sie mit einer im wesentlichen horizontal verlaufenden Schiebeführung für die zwei einender gegenüberliegenden Ränder der Tragplatte samt den an ihr festgelegten Filterschläuchen (4) aus einer Filtrierstellung im Inneren des, vorzugsweise bauchigen, Gehäuses (1) schubladenartig durch eine Türe (1.41) des Gehäuses (1) herausschiebbar ist, wobei ferner für mindestens einen Rand der Tragplatte (6) eine Dichtungseinrichtung (18) vorgesehen ist, an welcher der Rand der Tragplatte (6) in der Filtrierstellung anliegt und so gegen die an die Saugleitung (5) angeschlossene Oberseite des Gehäuses (1) abdichtet, **dadurch gekennzeichnet, dass** eine Abhebeeinrichtung (16; 14, 19, 21) vorgesehen ist, durch die die Tragplatte (6) während des Schiebens entlang der Schiebeführung (10; 66) von der Dichtungseinrichtung (18) abhebbar ist, dass die Schiebeführung (10; 66) und/oder die Tragplatte (6) über die Länge der Platte (6) insgesamt mindestens eine Rolle (14a) an jedem Rand aufweist, die mit einer Verstelleinrichtung (19, 21, 23, 24) verbunden ist, durch welche sie aus einer Dichtstellung, in welcher sie die Tragplatte (6) gegen die Dichtung (18) drückt, in mindestens eine Führungsstellung verstellbar ist, in welcher die Rolle (14a) den Druck gegen die Tragplatte (6) und die Dichtungseinrichtung (18) aufhebt und die Rolle (14a) nach Art eines Rollenförderers für die Verschiebung der Tragplatte (6) wirkt und so einen Teil der Schiebeführung bildet.

2. Vorrichtung nach Anspruch 1, **dadurch gekennzeichnet, dass** die Schiebeführung (10; 66) und/oder die Tragplatte (6) über die Länge der Platte (6) insgesamt mindestens zwei Rollen (14; 14a), vorzugsweise 3 bis 5 Rollen (14a), an jedem Rand aufweist.

3. Vorrichtung nach Anspruch 1 oder 2, **dadurch gekennzeichnet, dass** die Schiebeführung mindestens eine gegen die Tragplattenmitte hin offene, den Rand der Tragplatte (6) haltende U-Schiene (6.1) mit zwei zueinander parallelen Schenkeln (6.11, 6.12) und einem Mittelabschnitt (6.13) aufweist, und dass vorzugsweise diese U-Schiene (6.1) am Rande der Tragplatte (6) fixiert, insbesondere mit ihr einstückig, nach oben ragend vorgesehen ist.

4. Vorrichtung nach den Ansprüchen 1 und 3, **dadurch gekennzeichnet, dass** die Rolle (14a) innerhalb der U-Schiene (6.1) aus einer um unteren Schenkel (6.11) anliegenden, die Tragplatte (6) gegen die Dichtungseinrichtung (18) drückenden Stellung mit Hilfe der Verstelleinrichtung (19, 21, 23, 24) in mindestens eine am oberen Schenkel (6.12) anliegende und diesen bei der Schiebebewegung führende Stellung verstellbar ist.

5. Vorrichtung nach einem der Ansprüche 1 bis 4, **dadurch gekennzeichnet, dass** die Verstelleinrichtung (19, 21, 23, 24) einen Hebel (19) aufweist, an dessen einem Ende die Rolle (14a) gelagert ist, und der mit einer Betätigungseinrichtung (21, 23, 24) verbunden ist.

6. Vorrichtung nach einem der vorhergehenden Ansprüche, **dadurch gekennzeichnet, dass** eine Halteeinrichtung (28; 36) für das beim Herausschieben der Tragplatte (6) von der Führungseinrichtung (10) ununterstützte Ende der Tragplatte (6) vorgesehen ist, dass vorzugsweise diese nach Art eines Hebezeuges ausgebildet ist, und dass insbesondere das Hebezeug an der Oberseite des Gehäuses (1) in dessen Inneren montiert ist
und/oder
dass die Halteeinrichtung (28; 36) eine Abstützeinrichtung (36) zum vollständigen Herausnehmen der Tragplatte (6) aus dem Gehäuse (1) aufweist.

7. Vorrichtung nach einem der vorhergehenden Ansprüche, **dadurch gekennzeichnet, dass** am, vorzugsweise bauchigen, insbesondere als Viereck mit nach aussen gebauchten Zylinderwänden (1.1, 1.2, 1.3, 1.4.2) ausgebildeten, Gehäuse (1) mindestens ein seitlich, vorzugsweise wenigstens annähernd tangential, einmündender Staubgaseinlass (3) vorgesehen ist.

## Claims

1. Hose filter device comprising a filter chamber (2), in which a plurality of filter hoses (4), accommodating a supporting cage (8) in their interior, are fixed with its upper side to a supporting plate (6) and are inserted through holes (6.2) of the same, wherein the filter chamber (2), subdivided by the supporting plate (6) into an upper clean gas chamber (2.2) and a lower dust chamber (2.1), is accommodated in a housing (1), which together with the clean gas chamber (2.2) is in communication with a suction conduit (5), the supporting plate (6), including the hose filters (4) fixed to it, is able to be taken out of the filter chamber (2), wherein the supporting plate (6) has holding surfaces (6.1) at its upper side, on which it may be pulled out by a substantially horizontally extending slide guidance for the opposing borders of the supporting plate including the hose filters (4) fixed to it from a filtering position in the interior of the, preferably round bodied, housing (1) like a drawer through a door (1.41) of the housing (1), wherein moreover a sealing means (18) is provided for at least one border of the supporting plate (6) engaging it in said filtering position, thus sealing against the upper side of the housing (1), which is in communication with the suction conduit (5), **characterised in that** a lifting device (16; 14, 19, 21) is provided, by which the supporting plate (6) may be lifted from the sealing means (18), while sliding along the slide guidance (10; 66), that the slide guidance (10; 66) and/or the supporting plate (6), over the length of the plate (6) on each border, has all in all at least one roller (14a), which is connected to a displacement device (19, 21, 23, 24), by which it may be displaced from a sealing position, in which it presses the supporting plate (6) against said sealing means (18), into at least one guide position, in which the roller (14a) cancels the pressure against the supporting plate (6) and the sealing means (18), the roller (14a) acting in the way of a roller conveyor for displacing the supporting plate (6), thus forming part of the slide guidance.

2. Device according to claim 1, **characterised in that** the slide guidance (10; 66) and/or the supporting plate (6), over the length of the plate (6) on each border, has all in all at least two rollers (14; 14a), preferably 3 to 5 rollers (14a).

3. Device according to claim 1 or 2, **characterised in that** the slide guidance comprises at least one U shaped rail (6.1), which is open towards the middle of the supporting plate, holds the border of the supporting plate (6) and includes two legs (6.11, 6.12) parallel to each other as well a centre section (6.13), and that preferably this U shaped rail (6.1) is fixed to the border of the supporting plate (6), and in particular is integrally provided projecting upwardly.

4. Device according to claims 1 and 3, **characterised in that** the roller (14a) is displaceable by means of the displacement device (19, 21, 23, 24) within the U shaped rail (6.1) from a position, in which it engages the lower leg (6.11) and presses the supporting plate (6) against said sealing means (18), into at least one position, in which it engages the upper leg (6.12) and guides it during the sliding motion.

5. Device according to any of claims 1 to 4, **characterised in that** the displacement device (19, 21, 23, 24) comprises a lever (19), at one end of which the roller (14a) is born, and which is connected to actuation means (21, 23, 24).

6. Device according to any of the preceding claims, **characterised in that** a holding device (28; 36) is provided for that end of the supporting plate (6) which is not supported by guidance device (10), when pulling the supporting plate (6) out, that it is preferably formed in the way of a hoisting device, and that in particular the hoisting device is mounted on the upper side of the housing (1) in its interior
and/or
that the holding device (28; 36) comprises a supporting device (36) for completely pulling out the supporting plate (6) from the housing (1).

7. Device according to any of the preceding claims, **characterised in that** at the, preferably round bodied, housing (1), which is in particular formed as a quadrangle having cylinder walls (1.1, 1.2, 1.3, 1.4.2) bulging outwardly, at least one dust gas inlet (3) is provided, which flows laterally into it, preferably at least approximately tangentially.

## Revendications

1. Dispositif de filtre à manche comprenant une chambre de filtre (2), dans laquelle une pluralité des manches de filtre (4), accueillants chacune un panier support (8) dans son intérieur, sont fixées avec leur côté supérieur à une plaque d'appui (6) et sont enfilées dans des trous (6.2) de celle-ci, dans lequel la chambre de filtre (2), subdivisée par la plaque d'appui (6) en une chambre de gaz épuré supérieure (2.2) et en une chambre de poussière (2.1), est relogée dans une enceinte (1), reliée à un conduit d'aspiration (5) conjointement avec chambre de gaz épuré (2.2), et la plaque d'appui (6) avec les manches de filtre (4) fixées à celle-ci peut être enlevée de la chambre de filtre (2), dans lequel la plaque d'appui (6), à son côté supérieur, comprend des surfaces de retenue (6.1), auxquelles elle peut être glissée en dehors avec un guidage de coulissement sensiblement horizontal pour les deux bords opposés de la plaque d'appui y compris les manches de filtre (4) fixées à elle-même à partir d'une position de filtrage à l'intérieur de l'enceinte (1), de préférence bombée, d'une manière d'un tiroir par une porte (1.41) de l'enceinte (1), dans lequel de plus un dispositif de joint (18) est prévu pour au moins un bord de la plaque d'appui (6), auquel le bord de la plaque d'appui (6) s'applique dans la position de filtrage, ainsi joignant contre le côté supérieur de l'enceinte (1), qui est relié au conduit d'aspiration (5), **caractérisé en ce, qu'**un dispositif de levage (16 ; 14, 19, 21) est prévu, par lequel la plaque d'appui (6) peut être enlevé du dispositif de joint (18) pendant le coulissement le longue du guidage de coulissement (10 ; 66), que le guidage de coulissement (10 ; 66) et/ou la plaque d'appui (6) comprend(comprennent) sur la longueur de la plaque (6) dans l'ensemble au moins un rouleau (14a) à chaque bord, qui est relié à un dispositif de déplacement (19, 21, 23, 24), par lequel il peut être déplacé d'une position d'étanchéité, dans laquelle il presse la plaque d'appui (6) contre le dispositif de joint (18), en au moins une position de guidage, dans laquelle le rouleau (14a) lève la pression contre la plaque d'appui (6) et le dispositif de joint (18), et le rouleau (14a) agit à la façon d'un transporteur à rouleaux pour le déplacement de la plaque d'appui (6), ainsi formant une partie du guidage de coulissement.

2. Dispositif selon la revendication 1, **caractérisé en ce, que** le guidage de coulissement (10 ; 66) et/ou la plaque d'appui (6) comprend(comprennent) sur la longueur de la plaque (6) dans l'ensemble au moins deux rouleaux (14, 14a) à chaque bord, de préférence 3 à 5 rouleaux (14a).

3. Dispositif selon la revendication 1 ou 2, **caractérisé en ce, que** le guidage de coulissement comprend au moins un rail en U (6.1) ouvert vers le centre de la plaque d'appui, qui soutient le bord de la plaque d'appui (6) et qui a deux branches parallèles l'un à l'autre (6.11, 6.12) et une section moyenne (6.13), et que de préférence ce rail en U (6.1) est prévu d'une façon fixée au bord de la plaque d'appui (6), en particulier intégral, en faisant saillie vers le haut.

4. Dispositif selon les revendications 1 et 3, **caractérisé en ce, que** le rouleau (14a) est déplaçable dans le rail en U (6.1) d'une position, où il contacte la branche inférieure (6.11) et presse la plaque d'appui (6) contre le dispositif de joint (18), vers au moins une position, où il contacte la branche supérieur (6.12) et guide celle-ci pendant le mouvement de coulissement, à l'aide du dispositif de déplacement (19, 21, 23, 24).

5. Dispositif selon une quelconque des revendications 1 à 4, **caractérisé en ce, que** le dispositif de déplacement (19, 21, 23, 24) comprend un levier (19), un rouleau (14a) étant logé à un de ses bouts, qui est relié à un dispositif d'actuation (21, 23, 24).

6. Dispositif selon une quelconque des revendications précédentes, **caractérisé en ce, qu'**un dispositif de soutien (28 ; 36) est prévu pour ce bout de la plaque d'appui, qui n'est pas appuyé par le dispositif de guidage (10) lors du glissement en dehors de la plaque d'appui (6), qu'il est, de préférence, formé à la façon d'un appareil de levage, et que l'appareil de levage est particulièrement installé au côté supérieur de l'enceinte (1) dans son intérieur
et/ou
que le dispositif de soutien (28 ; 36) comprend un dispositif de support (36) pour déboîter la plaque d'appui (6) complètement de l'enceinte (1).

7. Dispositif selon une quelconque des revendications précédentes, **caractérisé en ce, qu'**à l'enceinte (1), de préférence bombée, particulièrement comme un quadrilatère aux parois cylindriques (1.1, 1.2, 1.3, 1.4.2) bombées vers l'extérieur, au moins un entrée de gaz à poussière (3) est prévu, qui débouche latéralement, de préférence au moins approximativement de façon tangentielle.
